Europäisches Patentamt

European Patent Office

Office européen des brevets

(11) Numéro de publication : **0 056 758**
**B1**

(12) # FASCICULE DE BREVET EUROPÉEN

(45) Date de publication du fascicule du brevet :
17.07.85

(21) Numéro de dépôt : 82400060.8

(22) Date de dépôt : 14.01.82

(51) Int. Cl.⁴ : **F 02 C 9/38, F 02 C 9/46**

(54) Dispositif de régulation de débit pour système d'alimentation en combustible liquide de moteur à turbine à gaz.

(30) Priorité : 19.01.81 FR 8100853

(43) Date de publication de la demande :
28.07.82 Bulletin 82/30

(45) Mention de la délivrance du brevet :
17.07.85 Bulletin 85/29

(84) Etats contractants désignés :
DE FR GB

(56) Documents cités :
FR-A- 924 558
FR-A- 1 042 608
FR-A- 1 045 216
FR-A- 1 311 898
FR-A- 1 501 587
FR-A- 2 394 680
GB-A- 592 769
GB-A- 773 148
GB-A- 920 662
GB-A- 1 206 944
US-A- 2 909 896
US-A- 2 983 100
US-A- 3 167 082
US-A- 3 564 844

(73) Titulaire : SOCIETE NATIONALE D'ETUDE ET DE
CONSTRUCTION DE MOTEURS D'AVIATION,
"S.N.E.C.M.A."
2 Boulevard Victor
F-75015 Paris (FR)

(72) Inventeur : Fondacci, Jean-Luc "Les Trois Rivières"
Bâtiment B No 524 Avenue J. Passero
F-06210 Mandelieu (FR)

(74) Mandataire : Moinat, François et al
S.N.E.C.M.A. Service des Brevets Boîte Postale 81
F-91003 Evry Cedex (FR)

**Description**

L'invention concerne un dispositif de régulation de débit pour système d'alimentation en combustible liquide de moteur à turbine à gaz muni d'un compresseur d'air. Ledit système est du genre comprenant, comme décrit par le document US-A-2 983 100 :

une pompe volumétrique de circulation de combustible entraînée soit par l'arbre du moteur, soit par des moyens auxiliaires,

une canalisation d'admission délivrant à la pompe le combustible d'un réservoir,

une canalisation d'alimentation délivrant à la chambre de combustion du moteur le combustible refoulé par la pompe,

un organe doseur de débit inséré dans la canalisation d'alimentation et des moyens d'assigner des valeurs déterminées à la section de passage dudit organe doseur (que l'on dénommera doseur principal)

et un circuit de retour de combustible reliant la canalisation d'alimentation en amont du doseur principal à la canalisation d'admission.

Le dispositif de régulation décrit par ce document est en outre du genre comprenant un deuxième organe doseur de débit (que l'on dénommera doseur auxiliaire) inséré dans le circuit de retour et des moyens de commande automatique de la section de passage de ce doseur auxiliaire, lesdits moyens de commande automatique étant des moyens agissant sur ladite section de passage pour maintenir, tant que la section de passage du doseur principal demeure comprise dans des limites déterminées, la valeur de la chute de pression du combustible au passage dudit doseur principal sensiblement proportionnelle à la valeur de la pression d'air refoulée par un étage convenablement choisi du compresseur.

Selon ce document toutefois, le dispositif de régulation, en plus du doseur principal et du doseur auxiliaire, comporte également un doseur pilote et un doseur de régulation, ces trois derniers doseurs comportant chacun un plongeur et un ressort, ce qui entraîne une grande complexité de réalisation et de fonctionnement qui sont contraires à la simplification recherchée par l'invention.

On connaît également par FR-A-2 394 680, un dispositif de régulation du genre précité. Le circuit de retour comprend au moins deux doseurs auxiliaires de débit. L'un est commandé par la pression de refoulement de la pompe et l'autre par la pression de refoulement d'un étage du compresseur. Ce dispositif est censé éviter, en régime transitoire, des incidents tels que la surchauffe ou le décrochage du compresseur. Il est d'une réalisation compliquée en raison du nombre des doseurs auxiliaires et du fait que ceux-ci comportent des moyens élastiques de rappel. Sa loi de fonctionnement est mal définie car les doseurs auxiliaires agissent indépendamment l'un de l'autre.

Par ailleurs, US-A-3 564 844 décrit un doseur auxiliaire de débit placé dans le circuit de retour d'un dispositif de régulation du genre précité. Le positionnement de ce doseur est toutefois commandé par un dispositif à quatre soufflets agissant sur un levier qui influence une contre-pression appliquée au tiroir du doseur par l'intermédiaire d'un orifice variable. Les pressions de commande des soufflets sont obtenues à partir du doseur principal ou d'un dispositif à rapport de pressions relié à deux points du compresseur. En regard de l'objectif visé par l'invention, ce dispositif présente également une complexité inacceptable.

Le dispositif de régulation de l'invention est caractérisé en ce qu'il comprend :

une enceinte étanche divisée en une première chambre et en une deuxième chambre par une paroi séparatrice transversale étanche, la première chambre étant insérée dans le circuit de retour de combustible et comportant ainsi un orifice d'admission de combustible et un orifice de sortie de combustible et la deuxième chambre étant en communication avec l'étage choisi du compresseur,

un premier soufflet étanche déformable en longueur logé dans la première chambre, fixé par l'une de ses extrémités à une paroi de l'enceinte opposée à l'orifice de sortie de combustible, en communication avec la canalisation d'alimentation en aval du doseur principal de débit et portant à son extrémité libre un clapet qui tend à fermer l'orifice de sortie de ladite première chambre lorsque ledit soufflet se dilate,

un deuxième soufflet étanche déformable en longueur et vide d'air, logé dans la deuxième chambre dans laquelle il est fixé par l'une de ses extrémités à la même paroi d'enceinte que le premier soufflet,

enfin, un levier traversant la paroi séparatrice à laquelle il est lié par une articulation étanche et joignant les extrémités libres des deux soufflets auxquelles il est lié par des articulations.

Le dispositif de régulation de l'invention présente l'avantage d'une réalisation remarquablement simple et permet de respecter, en régime permanent (c'est-à-dire pour une section de passage donnée du doseur principal) une relation bien définie entre le débit de combustible et la pression d'air. On verra aussi qu'il assure une bonne protection contre les risques de pompage du moteur et contre les risques d'extinction « pauvre » ou « riche » de la chambre de combustion. Il est ainsi avantageusement utilisable comme dispositif de régulation de secours d'un turboréacteur d'aéronef.

D'autres dispositions et avantages du dispositif de régulation de l'invention apparaîtront à la lecture des descriptions qui suivent, en référence aux dessins annexés dans lesquels :

la figure 1 est un dessin schématique d'un système d'alimentation de turboréacteur compor-

2

tant le dispositif de régulation de l'invention,

la figure 2 est un diagramme de fonctionnement,

la figure 3 représente une variante de réalisation du montage de l'un des soufflets représentés dans la figure 1,

la figure 4 est un diagramme,

la figure 5 représente une variante de réalisation du doseur principal représenté dans la figure 1.

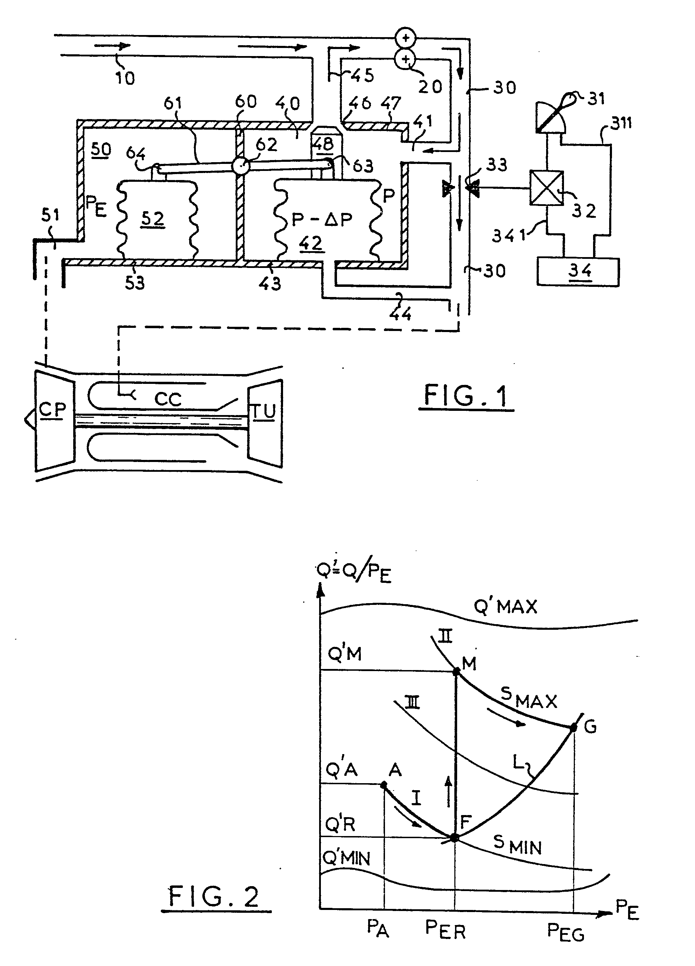

On considère d'abord la figure 1. Des flèches indiquent les directions de circulation du combustible liquide. Celui-ci, amené par la canalisation 10, est refoulé par la pompe volumétrique 20 dans la canalisation 30 qui le délivre à la chambre de combustion CC d'un turboréacteur dont on a représenté le compresseur CP et la turbine TU. Le débit de combustible est réglé au moyen d'une manette 31 agissant, par l'intermédiaire d'un actionneur 32, sur la section de passage d'un organe doseur de débit (par exemple une vanne d'étranglement) qui constitue le doseur principal 33.

Conformément à l'invention, le dispositif de régulation du système d'alimentation de la figure 1 comprend :

une enceinte étanche définissant deux chambres 40 et 50 séparées par une cloison médiane étanche 60, la chambre 40 communiquant par une canalisation de dérivation 41 avec la canalisation 30 en amont du doseur principal 33 et la chambre 50 communiquant avec un étage convenablement choisi du compresseur CP par une tubulure 51 de prise de pression,

un premier soufflet déformable étanche 42 fixé par l'un de ses fonds (fond fixe) à une cloison 43 de la chambre 40 et dont l'intérieur communique avec la canalisation 30, en aval du doseur principal 33, au moyen d'une tubulure 44,

un deuxième soufflet déformable étanche 52 fixé par l'un de ses fonds (fond fixe) à une cloison 53 de la chambre 50 qui prolonge la cloison 43, le vide étant fait dans ledit soufflet,

une canalisation 45 mettant en communication la canalisation 10 d'admission de combustible avec la chambre 40 dans laquelle elle débouche par un orifice 46 ménagé dans la cloison 47 opposée à la cloison 43,

une touche 48 fixée au fond mobile du soufflet 42 et disposée en face de l'orifice 46 qu'elle obture plus ou moins selon l'élongation de ce soufflet, cette touche coopérant avec cet orifice pour constituer le doseur auxiliaire de débit,

enfin, un levier 61 traversant la cloison 60 à laquelle il est lié par une articulation étanche 62 et dont les deux extrémités sont respectivement liées, d'une part au fond mobile du soufflet 42 par une articulation 63, d'autre part au fond mobile du soufflet 52 par une articulation 64.

Le dispositif de régulation est ainsi assimilable à une balance dont le levier 61 est le fléau et dont les deux plateaux sont respectivement constitués par les fonds mobiles du soufflet 52 et du soufflet 42.

On va maintenant écrire les équations d'équilibre du dispositif, en appelant :

S : la section variable de passage du doseur principal de débit 33

Q : le débit de combustible qui la traverse

P : la pression du combustible en amont du doseur 33

$P - \Delta P$ : la pression du combustible en aval

K : le coefficient de débit de ce doseur suivant la loi connue $Q = K \cdot S \cdot (\Delta P)^{1/2}$

$S_1$ : la section efficace du soufflet 42

$S_2$ : la section efficace du soufflet 52

$L_1$ : la longueur du bras du levier 61 joignant les articulations 62 et 63

$L_2$ : la longueur du bras du levier 61 joignant les articulations 62 et 64

$P_E$ : la pression d'air régnant dans la chambre 50, c'est-à-dire la pression d'air dans la section du compresseur CP à laquelle est reliée la tubulure 51.

Lorsque la pompe 20 est entraînée (soit par l'arbre du moteur à turbine, soit par un moteur indépendant) on peut écrire, lorsque le dispositif est en équilibre pour une valeur déterminée de la section S assignée à l'organe doseur 33 :

$$\Delta P \cdot S_1 \cdot L_1 = P_E \cdot S_2 \cdot L_2 \qquad (1)$$

en négligeant la valeur de la surface de la touche 48 vis-à-vis de la section efficace $S_1$.

Comme

$$Q = K \cdot S \cdot (\Delta P)^{1/2} \qquad (2)$$

on obtient en éliminant $\Delta P$ entre les deux équations :

$$Q/(P_E)^{1/2} = S \cdot K \cdot (S_2 \cdot L_2/S_1 \cdot L_1)^{1/2} \qquad (3)$$

Les paramètres K, $S_1$, $L_1$, $S_2$ et $L_2$ étant des constantes, on peut écrire :

$$K(S_2 \cdot L_2/S_1 \cdot L_1)^{1/2} = K_1 \qquad (4)$$

$K_1$ étant une constante caractérisant le dispositif.

Par conséquent, lorsque le dispositif est en équilibre, c'est-à-dire lorsqu'un régime permanent de fonctionnement est établi :

$$Q/(P_E)^{1/2} = K_1 \cdot S. \qquad (5)$$

Pour toute valeur de la section S de passage de l'organe doseur 33 assignée au moyen de la manette 31, le débit Q du combustible injecté dans la chambre de combustion CC demeure donc proportionnel à la racine de la pression d'air $P_E$.

Mais on peut aussi déduire de l'équation (1) :

$$\Delta P = P_E \cdot S_2 \cdot L_2/S_1 \cdot L_1 = K_2 \cdot P_E \qquad (6)$$

relation dans laquelle $K_2$ est aussi une constante.

En considérant cette relation (6), on voit que le dispositif de l'invention agit pour maintenir la chute de pression $\Delta P$ proportionnelle à la pression d'air $P_E$. La figure 1 ne représente qu'une forme de réalisation possible et toute autre forme de réalisation permettant de maintenir cette proportionnalité appartient à l'invention.

Ainsi, lorsque le débit Q varie pour une raison quelconque, par exemple parce que la vitesse de la pompe 20 change, l'équation (2) montre que la chute de pression $\Delta P$ imposée par l'organe doseur 33 varie dans le même sens. Il y a déséquilibre mais le soufflet 42 déplace la touche 48 pour modifier dans le même sens le débit de fuite de combustible retournant en amont de la pompe 20. Les canalisations 41 et 45 forment avec l'organe doseur constitué par la touche 48 et par l'orifice 46 un by-pass dont la variation de débit compense automatiquement toute variation de débit Q traversant l'organe doseur 33.

On considère maintenant le diagramme de la figure 2 pour expliquer comment, lorsque la section S passe à une nouvelle valeur obtenue par le jeu de la manette 31, le dispositif passe d'un état d'équilibre à un autre (régime transitoire). Le diagramme montre dans le champ ($Q/P_E$, $P_E$), les caractéristiques de fonctionnement et de régulation d'un turboréacteur équipé du dispositif de la figure 1. Pour simplifier l'examen du diagramme, on utilise la variable auxiliaire $Q' = Q/P_E$, proportionnelle à la richesse.

La courbe I est la caractéristique d'allumage et de ralenti du turboréacteur correspondant à la valeur minimale $S_{min}$ de la section S de l'organe doseur 33 et la courbe II la caractéristique « plein gaz » correspondant à la valeur maximale $S_{max}$ de S. La courbe L, qui coupe les deux courbes I et II respectivement aux points F et G représente la loi de stabilité de la machine. La courbe III est une caractéristique intermédiaire.

Au moment de l'allumage (point A de la courbe I), la valeur de $P_E$ est égale à la valeur $P_A$ de la pression atmosphérique et le débit de combustible $Q_A$ injecté correspond, d'après la relation (5) à :

$$Q_A = Q'_A \cdot P_A = K_1 \cdot S_{min}(P_A)^{1/2} \qquad (7)$$

Le réacteur s'enroule et le point de fonctionnement suit la caractéristique I jusqu'à l'intersection F de cette caractéristique avec la courbe L. Le débit de ralenti $Q_R$ vaut alors :

$$Q_R = Q'_R \cdot P_{ER} = K_1 \cdot S_{min}(P_{ER})^{1/2} \qquad (8)$$

relation dans laquelle $P_{ER}$ est la valeur particulière correspondante de la pression d'air $P_E$.

On a donc :

$$Q_R/Q_A = (P_{ER}/P_A)^{1/2} \qquad (9)$$

Afin d'augmenter le régime du turboréacteur, le pilote agit alors sur la manette 31 pour augmenter la section de passage S du doseur principal 33. Pour montrer un avantage essentiel du dispositif de l'invention, on envisage ici le cas limite où cette action est si brutale que S passe quasi-instantanément à la valeur maximale $S_{max}$ (caractéristique II). A cet instant précis on a alors le débit maximal :

$$Q_M = Q'_M \cdot P_{ER} = K_1 \cdot S_{max}(P_{ER})^{1/2} \qquad (10)$$

qui correspond au point M de la caractéristique II, la richesse étant limitée à la valeur définie par cette caractéristique, à savoir :

$$Q'_M = K_1 \cdot S_{max}/(P_{ER})^{1/2} \qquad (11)$$

Il faut évidemment que cette valeur de richesse demeure inférieure à une limite admissible pour un fonctionnement correct du turboréacteur (courbe $Q'_{max}$). Si elle l'est, le turboréacteur accélère rapidement et la pression d'air $P_E$ augmente, c'est-à-dire que le point de fonctionnement suit la courbe II jusqu'à l'intersection G de celle-ci avec la courbe L. Plus précisément, la valeur de la richesse passe de :

$$K_1 \cdot S_{max}/(P_{ER})^{1/2}$$

à :

$$K_1 \cdot S_{max}/(P_{EG})^{1/2}$$

Le dispositif de régulation de l'invention a donc amorti l'action de la manette 31 en permettant d'obtenir une valeur d'accélération optimale du turboréacteur.

On remarque sur la figure 2, outre la courbe $Q'_{max} = f_1(PE)$ qui représente la richesse maximale admissible (en vue notamment d'éviter tout risque d'extinction « riche » de la chambre de combustion), la présence de la courbe $Q'_{min} = f_2(PE)$ qui représente la richesse minimale admissible, en vue notamment d'éviter tout risque d'extinction « pauvre ».

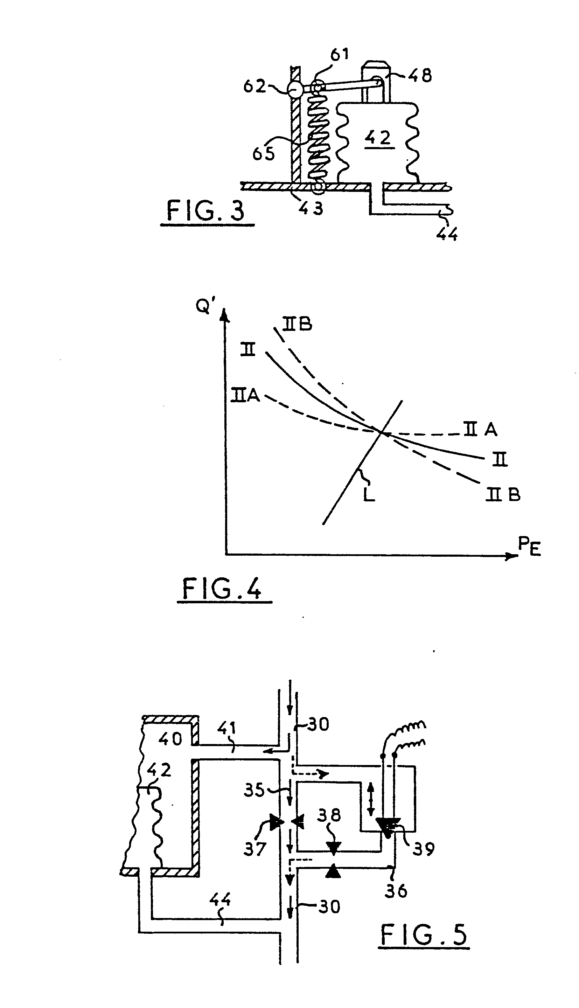

On a supposé jusqu'ici que la raideur du système déformable constitué par les soufflets 42 et 52 et par le levier 61 est nulle. On peut cependant, comme représenté à la figure 3, en vue par exemple de mieux adapter la réponse du dispositif aux caractéristiques de fonctionnement du turboréacteur, conférer à ce système déformable une raideur déterminée en lui ajoutant au moins un élément de rappel élastique tel que le ressort 65 qui est lié à la paroi 43 et au levier 61 et qui s'oppose à l'application de la touche 48 contre l'orifice 46 ou qui applique la touche sur l'orifice 46 avec un effort donné. Ce rappel élastique peut également être effectué par le soufflet lui-même. En choisissant convenablement les points d'application du ou des organes de rappel, on peut par exemple, comme le montre la figure 4, modifier la pente moyenne d'une caractéristique telle que la courbe II de la figure 2, en obtenant ainsi une nouvelle caractéristique telle que IIA ou IIB. On dispose évidemment d'une grande liberté en ce qui concerne la disposition des ressorts (qui peuvent par exemple être logés dans les soufflets). Si l'on rappelle que l'on dispose aussi du choix de l'étage du compresseur CP (fig. 1) sur lequel est « piquée » la tubulure de prise de pression 51, on voit que l'on dispose de nombreux moyens pour adapter le fonctionnement du dispositif de régulation de l'invention aux caractéristiques d'une turbomachine déterminée.

On considère enfin, pour terminer la présente description, les diverses possibilités de réalisation du doseur principal de débit qui comporte, dans le schéma de la figure 1, le doseur 33 actionné par l'actionneur 32 lui-même commandé par la manette 31. L'actionneur 32 peut notamment être constitué par une simple liaison mécanique entre la manette 31 et le doseur 33, la valeur maximale du régime « plein gaz » étant alors définie par la valeur maximale de la section de passage S du doseur 33 et ce régime pouvant être corrigé par l'action du pilote sur la manette 31 au vu de la valeur de la vitesse de rotation du réacteur. Mais cet actionneur 32 peut encore être constitué par un moteur électrique (par exemple un moteur pas-à-pas) dont la rotation est commandée par un calculateur 34 qui reçoit d'une liaison électrique 311 des signaux d'information sur la position de la manette 31 et qui élabore des signaux de commande qu'il délivre à ce moteur par une liaison électrique 341.

D'autres solutions sont encore possibles dans le cadre de l'invention. La figure 5 est relative à une réalisation simplifiée, permettant par exemple la commande d'un réacteur non pilotable à deux régimes de fonctionnement. On retrouve dans la figure 5 la canalisation d'alimentation 30, la canalisation de retour 41 en liaison avec la chambre 40 et la tubulure de prise de pression 44 en liaison avec l'intérieur du soufflet 42. La partie 35 de la canalisation 30 comprise entre la canalisation 41 et la tubulure 44 est munie d'une dérivation 36. Le doseur 33 de la figure 1 est remplacé par deux doseurs de section fixe 37 et 38 (par exemple deux diaphragmes) respectivement disposés dans la partie 35 et dans la dérivation 36. Un électro-robinet 39 est disposé dans celle-ci et permet de l'obturer. Sa fermeture définit le régime « allumage-ralenti » puisque la seule section de passage du combustible est celle du doseur 37. Son ouverture définit le régime « croisière-plein gaz », dans lequel la section de passage du combustible est égale à la somme des sections des doseurs 37 et 38.

**Revendications**

1. Dispositif de régulation de débit pour un système d'alimentation en combustible liquide d'un moteur à turbine à gaz muni d'un compresseur d'air (CA), ledit système d'alimentation étant du genre comprenant une pompe volumétrique (20) de circulation de combustible, une canalisation d'admission (10) délivrant à la pompe le combustible d'un réservoir, une canalisation d'alimentation (30) délivrant à la chambre de combustion (CC) du moteur le combustible refoulé par la pompe (20), un organe doseur de débit (33) (dit doseur principal) inséré dans la canalisation d'alimentation (30), des moyens (31, 32) d'assigner des valeurs déterminées à la section de passage dudit organe doseur (33) et un circuit de retour (41, 45) de combustible reliant la canalisation d'alimentation (30) en amont du doseur principal (33) à la canalisation d'admission (10), ledit dispositif de régulation de débit étant du genre comprenant un deuxième organe doseur de débit (dit doseur auxiliaire) inséré dans le circuit de retour et des moyens de commande automatique de la section de passage de ce doseur auxiliaire, caractérisé en ce qu'il comprend :

une enceinte étanche divisée en une première chambre (40) et une deuxième chambre (50) par une cloison séparatrice transversale étanche (60), la première chambre (40) étant insérée dans le circuit de retour de combustible et comportant ainsi un orifice (41) d'admission de combustible et un orifice (46) de sortie de combustible, la deuxième chambre (50) étant quant à elle en communication avec un étage convenablement choisi du compresseur ;

un premier soufflet étanche (42) déformable en longueur, logé dans la première chambre (40), fixé par l'une de ses extrémités à une paroi (43, 53) de l'enceinte opposée à l'orifice (46) de sortie de combustible, en communication avec la canalisation de refoulement (30) en aval du doseur principal (33) et portant par son extrémité libre un clapet (48) qui tend à fermer l'orifice (46) de sortie de combustible lorsque ledit soufflet se dilate ;

un deuxième soufflet étanche (52) déformable en longueur et vide d'air, logé dans la deuxième chambre (50) dans laquelle il est fixé par l'une de ses extrémités à la même paroi d'enceinte (43, 53) que le premier soufflet (42) ;

enfin, un levier (61) traversant la paroi séparatrice (60) à laquelle il est fixé par une articulation étanche (62) et joignant les extrémités libres des deux soufflets (42, 52) auxquelles il est fixé par des articulations (respectivement 63 et 64), de telle sorte que tant que la section de passage du doseur principal demeure comprise dans des limites déterminées, la valeur de la chute de pression du combustible au passage du doseur principal est maintenue sensiblement proportionnelle à la valeur de la pression de l'air refoulé par l'étage choisi du compresseur.

2. Dispositif selon la revendication 1 caractérisé en ce que le mécanisme constitué par les deux soufflets (42, 52) et par le levier (61) comporte en outre des moyens (65) lui conférant une raideur déterminée.

3. Dispositif selon l'une quelconque des revendications 1 et 2 caractérisé en ce que le doseur principal de débit et les moyens d'assigner des valeurs déterminées à sa section de passage comprennent une canalisation de dérivation en U (36) reliée par ses deux extrémités à la conduite d'alimentation (30), un premier doseur de section fixe (37) inséré dans la conduite d'alimentation, un deuxième doseur de section fixe (38) inséré dans la canalisation de dérivation et des moyens (39) d'ouverture et de fermeture de ladite canalisation de dérivation.

**Claims**

1. Regulating device for a system supplying liquid fuel to a gas turbine engine comprising an air compressor (CP), the said supply system being of the type which comprises a volumetric pump (20) for circulating fuel, an inlet pipe (10) delivering the fuel from a reservoir to the pump, a feed pipe (30) delivering to the combustion chamber (CC) of the turbine the fuel which is fed back by the pump (20), a flow regulator member (33) (referred to as the main regulator) incorporated into the feed pipe (30), means (31, 32) for providing specific values of throughflow cross-section in the said regulator member (33), and a fuel return circuit (41, 45) linking the feed pipe (30) upstream of the main regulator (33) to the inlet pipe (10), the said regulating device being of the type which comprises a second regulator member (referred to as the auxiliary regulator) incorporated into the return circuit and means for automatically controlling the throughflow cross-section of the auxiliary regulator, characterised in that it comprises :

a sealed enclosure divided into a first chamber (40) and a second chamber (50) by a sealed transverse separator partition (60), the first chamber (40) being incorporated into the fuel return circuit and thus comprising a fuel inlet aperture (41) and a fuel outlet orifice (46), the second chamber (50) being in turn in communication with a suitably chosen stage of the compressor ;

a first sealed bellows unit (42) of variable length, housed within the first chamber (40), secured by one of its ends to a wall (43, 53) of the enclosure which is opposite the fuel outlet orifice (46), communicating with the return pipe (30) downstream of the main regulator (33) and carrying at its free end a valve (48) which tends to close the fuel outlet orifice (46) when the said bellows unit expands ;

a second sealed bellows unit (52) of variable length and evacuated, housed within the second chamber (50) in which it is secured by one of its ends to the same wall of the enclosure (43, 53) as the first bellows unit (42) ;

finally, a lever (61) traversing the separating wall (60) to which it is fixed by a sealed pivot (62) and joining the free ends of the two bellows units (42, 52) to which it is fixed by pivots (63 and 64 respectively), so that so long as the throughflow cross-section of the main regulator remains between certain limits, the value of the fuel pressure drop as it passes through the main regulator is maintained substantially proportional to the value of the pressure of the air returned by the chosen stage of the compressor.

2. Device according to claim 1, characterised in that the mechanism constituted by the two bellows units (42, 52) and by the lever (61) further comprises means (65) which impart a predetermined stiffness thereto.

3. Device according to either of claims 1 and 2, characterised in that the main flow regulator and the means for providing specific values of its throughflow cross-section comprise a U-shaped branch pipe (36) connected at both ends to the feed pipe (30), a first regulator of fixed cross-section (37) incorporated into the feed pipe, a second regulator of fixed cross-section (38) incorporated into the branch pipe and means (39) for opening and closing the said branch pipe.

## Patentansprüche

1. Regeleinrichtung für das Brennstoffzufuhrsystem einer Gasturbine, die mit einem Luftverdichter (CP) versehen ist, wobei das Zufuhrsystem aufweist : eine Verdrängerpumpe (20) zum Umwälzen des Brennstoffs, eine Einlaßleitung (10), die Brennstoff aus einem Tank zur Pumpe liefert, eine Zuführungsleitung (30), die an die Brennkammer (CC) des Motors den von der Pumpe (20) geförderten Brennstoff liefert, ein Dosierungsmittel (33) (Hauptdosierer genannt) in der Zuführungsleitung (30), Mittel (31, 32) zum Übertragen von Werten, die an dem Leitungsquerschnitt des Dosierungsmittels (33) bestimmt sind, und einen Rückführungskreis (41, 45) für den Brennstoff, der die Zuführungsleitung (30) stromauf des Hauptdosierers (33) mit der Einlaßleitung (10) verbindet, und wobei die Regeleinrichtung für die Brennstoffzufuhr aufweist : ein zweites Zuführdosierungsmittel (Hilfsdosierer genannt) in dem Rückführungskreis und Mittel zur automatischen Steuerung des Leitungsquerschnitts des Hilfsdosierers gekennzeichnet durch

einen dichten Raum, der in eine erste Kammer (40) und eine zweite Kammer (50) durch eine querliegende dichte Trennwand (60) unterteilt ist, wobei die erste Kammer (40) in den Rückführungskreis für den Brennstoff eingefügt ist und demzufolge eine Zuführungsöffnung (41) für den Brennstoff und eine Auslaßöffnung (46) für den Brennstoff enthält und wobei die zweite Kammer (50) ihrerseits mit einer passend ausgewählten Stufe des Verdichters in Verbindung steht ;

einen ersten dichten Balg (42), der in seiner Längsausdehnung verformbar ist, in der ersten Kammer (40) untergebracht ist, mit einem seiner Enden an einer Wand (43, 53) des Raumes gegenüber der Auslaßöffnung (46) für den Brennstoff befestigt ist, in Verbindung mit der Rückführungsleitung (30) stromab von dem Hauptdosierer (33) steht und an seinem freien Ende ein Ventilelement (48) trägt, das die Auslaßöffnung (46) für den Brennstoff jedesmal dann schließt, wenn sich der Balg ausdehnt ;

einen zweiten dichten Balg (52), der in seiner Längsausdehnung verformbar ist, luftleer ist und in der zweiten Kammer (50) untergebracht ist, in der er mit einem seiner Enden an derselben Wand (43, 53) wie der erste Balg befestigt ist ;

und schließlich einen Hebel (61), der die Trennwand (60) durchsetzt, an der er mittels eines dichten Gelenks (62) befestigt ist, und unmittelbar neben den freien Enden der beiden Bälge (42, 52) angeordnet ist, an denen er durch Gelenke (63 bzw. 64) befestigt ist, derart, daß solange der Durchlaßquerschnitt des Hauptdosierers in bestimmten Grenzen verbleibt, der Wert des Druckabfalls des Brennstoffs beim Durchtritt durch den Hauptdosierer proportional zum Wert des Drucks der Luft gehalten wird, die durch die ausgewählte Stufe des Verdichters verdrängt wird.

2. Regeleinrichtung nach Anspruch 1, dadurch gekennzeichnet, daß der Mechanismus aus den zwei Bälgen (42, 52) und dem Hebel (61) außerdem Mittel (65) enthält, die ihm eine bestimmte Steifigkeit verleihen.

3. Regeleinrichtung nach Anspruch 1 oder 2, dadurch gekennzeichnet, daß der Hauptdosierer für den Durchsatz und die Mittel zum Übertragen der an dessen Durchlaßquerschnitt bestimmten Werte eine U-förmige Nebenschlußleitung (36), die mit ihren beiden Enden mit der Zuführungsleitung (30) verbunden ist, einen ersten Dosierer (37) mit festem Querschnitt in der Zuführungsleitung, einen zweiten Dosierer (38) mit festem Querschnitt in der Nebenschlußleitung und Mittel (39) zum Öffnen und Schließen dieser Nebenschlußleitung aufweisen.

FIG. 1

FIG. 2

1

FIG. 3

FIG.4

FIG.5